# EUROPÄISCHE PATENTSCHRIFT

(11) **EP 0 484 332 B1**
(45) Veröffentlichungstag und Bekanntmachung des Hinweises auf die Patenterteilung: **26.01.1994**
(21) Anmeldenummer: 90906155.8
(22) Anmeldetag: 11.04.1990
(51) Int. Cl.: B09B 3/00

(54) **VERFAHREN UND VORRICHTUNG ZUR VERWERTUNG VON RESTSTOFFEN AUS LACKIEREREIEN ETC.**
PROCESS AND DEVICE FOR UTILIZING PAINT SHOP RESIDUES, ETC.
PROCEDE ET DISPOSITIF DE RECUPERATION DES RESIDUS DES ATELIERS DE VERNISSAGE, ETC.

(30) Priorität: 22.07.1989 DE 3924312
(43) Veröffentlichungstag der Anmeldung: 13.05.1992
(73) Patentinhaber: GFR Gesellschaft für die Aufbereitung und Verwertung von Reststoffen mbH, 97080 Würzburg (DE); VW KRAFTWERK GMBH, 38440 Wolfsburg (DE)
(72) Erfinder: WEISSFLOG, Eckhard, D-8700 Würzburg (DE); DEMMICH, Jörg, D-6464 Linsengericht 4 (DE); NAHMER, Anton, D-3180 Wolfsburg 1 (DE); NAGEL, Ulf, D-3180 Wolfsburg 1 (DE)
(74) Vertreter: Dallmeyer, Georg, Dipl.-Ing.
(86) Internationale Anmeldenummer: EP9000572
(87) Internationale Veröffentlichungsnummer: WO9101185

(56) Entgegenhaltungen:
- EP-A- 0 119 079
- EP-A- 0 277 299
- EP-A- 0 285 231
- DE-A- 3 018 506
- DE-A- 3 409 650
- DE-A- 3 632 661
- DE-A- 3 635 068
- DE-C- 3 900 482

## Beschreibung

Gegenstand der vorliegenden Erfindung sind ein Verfahren und eine Vorrichtung zur Verwertung von Reststoffen und Abwässern aus Lackierereien und lackverarbeitenden Betrieben, insbesondere von Lack- und Farbschlämmen sowie Farbmittelabfällen aus der Automobilindustrie. Selbstverständlich können aber auch Reststoffe aus anderen Industriezweigen mit verwertet und mit entsorgt werden, sofern sie gleiche oder ähnliche Zusammensetzungen aufweisen. Bisher sind diese Reststoffe nur dadurch entsorgt worden, daß sie als Abfälle auf Sonderdeponien verbracht oder in Sonderabfallverbrennungsanlagen beseitigt wurden. Bekanntlich ist der Raum in Sonderdeponien beschränkt und kostspielig und die derzeitige Kapazität von Sonderabfallverbrennungsanlagen unzureichend. Überdies wird eine Vermeidung bzw. Verwertung von Reststoffen gemäß § 5(1) Nr. 3 des BImSchG bzw. von Abfällen gemäß § 1a(1) des AbfG gefordert.

Lack- und Farbschlämme, aber auch Farbmittelabfälle und andere organische Schlämme, enthalten im allgemeinen mehr oder weniger große Mengen organischer Verbindungen, wie verdampfbare Lösungsmittel, und mehr oder weniger hochpolymere Bindemittel mit erheblichen Heizwerten sowie anorganische und/oder organische Farbstoffe oder Pigmente. In vielen Fällen enthalten sie auch noch nicht unerhebliche Mengen an Schwermetallen, so daß sie bei unsachgemäßer Deponierung das Grundwasser gefährden können. Versuche, diese problematischen Abfälle zu verbrennen, sind bisher daran gescheitert, daß diese Abfallstoffe meist zäh und klebrig sind und nicht einmal unter Zusatz von weiteren Lösungsmitteln soweit gelöst oder suspendiert werden können, daß sie problemlos in die Verbrennungsanlagen eindosiert werden können. Weiterhin entstehen bei der Verbrennung meist problematische und nur schwer zu reinigende Abgase, so daß dieser Weg der Entsorgung als ungeeignet erschien und nur in Sonderfällen einheitlicher und unproblematischer Zusammensetzung zur Anwendung gekommen ist.

Die Erfindung hat sich die Aufgabe gestellt, ein Verfahren und eine Vorrichtung zur Verwertung von Lack- und Farbschlämmen sowie Farbmittelabfällen und anderen organischen Schlämmen, insbesondere aus der Automobilindustrie, zu entwickeln, welche allgemein anwendbar sind. Die Erfindung hat sich insbesondere die Aufgabe gestellt, einen möglichst hohen Anteil der Reststoffe, vorzugsweise stofflich, zumindest aber energetisch, zu verwerten und dabei die verschiedensten Arten von Reststoffen mit einzubeziehen, die beispielsweise in der Automobilindustrie anfallen, weil sie mehr oder weniger mit Lack und Farbe behandelt, getränkt oder verunreinigt sind. So fallen zum Beispiel in der Automobilindustrie zunächst relativ große Mengen Lack- und Farbschlämme aus Lackierereien gleicher oder ähnlicher Zusammensetzung an, die aufgrund der verwendeten Materialien schwermetallarm sind. Weiterhin fallen Lack- und Farbschlämme insbesondere aus Sonderlackierungen an, die noch immer in hohem Maße schwermetallhaltig sind. Weiterhin fällt Lack- und Farbschlamm als Anreicherung in der Abwasseraufbereitung an. Weiterhin fallen an mit Lack oder Farbe beschichtete oder getränkte Abfälle aus Papier, Stoff oder Kunststoff sowie mit Lack oder Farbe verunreinigte Wachse, Fette, Öle oder Lösungsmittel.

In der deutschen Patentanmeldung P 39 00 482.1 ist bereits ein Verfahren zur Entsorgung von Lack- und Farbschlämmen sowie Farbmittelabfällen insbesondere aus der Automobilindustrie vorgeschlagen worden, bei dem die Abfälle gegebenenfalls nach weitgehender Abtrennung der verdampfbaren Lösungsmittel gegebenenfalls unter Kühlung vermahlen und mit mindestens der gleichen Gewichtsmenge Kohlenstaub sowie gegebenenfalls mit alkalischen Zuschlagstoffen, vorzugsweise Branntkalk und/oder Kalksteinmehl vermischt verbrannt werden.

Gemäß einer Pressemitteilung ist von einer britischen Firma eine Anlage entwickelt worden, in der hochgiftiger Lackschlamm getrocknet wird. Die abgeschiedenen Lösungsmittel werden in Gasform als Brennstoff zum Betrieb der Anlage verwendet. Die Schwermetalle, wie Chrom, Blei und Cadmium, werden in die Harze der Lacke eingekapselt. Es soll ein braunes Pulver mit geringerem Volumen entstehen, welches als Brennstoff oder als Komponente von Anstrichmitteln, wie Unterbodenschutz, und zur Geräuschdämpfung verwertet werden kann.

Aus der EP-A-0 277 299 ist ein Verfahren zum Trocknen eines Schlammes von suspendierten und gelösten Feststoffen in flüchtigen Flüssigkeiten bekannt, bei dem reinigende Partikel dem Schlamm beigemischt werden. Die reinigenden Partikel sollen deutlich größer sein als die suspendierten und gelösten Feststoffe. Dieses Gemisch wird durch einen Schneckenextruder mit indirektem Wärmeaustauscher hindurchgeleitet, wobei die verdampfbare Flüssigkeit verdampft wird und ein Produkt aus trocknen Partikeln entsteht, welches die Oberfläche des Extruders reinigt. Ohne den Zusatz der reinigenden Partikel kommt es zum Verkrusten und Verstopfen des Schneckenextruders. Als zu verarbeitendes Material wird in den Beispielen ausdrücklich Farbschlamm genannt, der ohne den Zusatz der reinigenden Partikel nicht in Schneckenextrudern verarbeitet werden kann. Als reinigende Partikel werden genannt: Steinsalz, erbsengroße Aquariumgranulate, grober Sand, gebrochene Kohle und gebrochenes vulkanisches Gestein. Die Mengen an reinigenden Zusätzen betragen im allgemeinen ein Drittel bis zwei Drittel des Gesamtgemisches. Zur Beseitigung der Farbschlämme ist es somit nötig, weitere Hilfsstoffe einzusetzen und dadurch die Menge der Abfallstoffe sogar noch zu erhöhen.

Aus der EP-A-0 285 231 ist ein Verfahren zur Behandlung von Abfallschlämmen mit organischen und anorganischen Bestandteilen bekannt, bei welchem das Gemisch auf so hohe Temperaturen aufgeheizt wird, daß nicht nur die flüchtigen Bestandteile, sondern auch die thermischen Zersetzungsprodukte der Kohlenwasserstoffe verdampfen, so daß feste Produkte entstehen, die praktisch kohlenwasserstoff-frei sind. Dazu werden Temperaturen von 260 bis 316°C (500 bis 600°F) angewendet. Um ein Verbacken und Verstopfen der Geräte zu vermeiden, soll auch hier ein reinigendes Material zugesetzt werden, so wie es ausführlicher in der oben erwähnten EP-A-0 277 299 beschrieben ist. Der höhere Energiebedarf zum Erhitzen auf Temperaturen bei denen sich die Kohlenwasserstoffe zersetzen, kann gegebenenfalls durch Verbrennung der entstehenden Abgase gewonnen werden. Auf alle Fälle entstehen auch bei diesem Verfahren nur feste anorganische Granulate, die entweder deponiert oder nur bedingt anderweitig verwertet werden können.

Es handelt sich in allen Fällen nur um Teillösungen, die nach Möglichkeit aber in ein integriertes Gesamtverfahren zur Verwertung und Entsorgung der genannten Reststoffe eingesetzt werden sollten. Dabei besteht die scheinbar unlösbare Problematik, daß eigentlich für jede Art von Reststoff ein besonderes und für ihn maßgeschneidertes Verwertungs- und Entsorgungskonzept zu entwickeln wäre, welches demzufolge auch maßgeschneiderte Vorrichtungen erforderlich macht. Zum anderen sind Herstellung und Betrieb von so vielen und obendrein verschiedenen Verfahren und Vorrichtungen apparativ und personell viel zu aufwendig. Weiterhin ist zu beachten, daß einige der Reststoffe mengenmäßig und zeitlich schwankend anfallen und es daher sehr unwirtschaftlich ist, dafür separate Verfahren und Vorrichtungen zu entwickeln und zu betreiben.

Es ist jetzt gelungen, diese schwierigen und widersprüchlichen Aufgaben überraschend einfach dadurch zu lösen, daß
1. die unterschiedlichen, gegebenenfalls mechanisch vorentwässerten Reststoffe in verschließbaren Transportbehältern an den verschiedenen Anfallorten des Betriebes getrennt gesammelt und zu einer zentralen Aufbereitungs- und Verwertungsanlage transportiert werden,
2. die unter den gewählten Prozessbedingungen flüchtige organische Verbindungen und/oder Wasser enthaltenden Reststoffe in einem weitgehend selbstreinigenden, indirekt beheizten kontinuierlich betriebenen Kontakttrockner bei 120 bis 250°C und leichtem Unterdruck unter Kneten und Mischen getrocknet und vorzerkleinert werden,
3. die so erhaltenen getrockneten Reststoffe je nach Zusammensetzung entweder
   a) gegebenenfalls unter Kühlung vermahlen und mit fossilen Brennstoffen, vorzugsweise Kohlenstaub, sowie gegebenenfalls mit alkalischen Zuschlagstoffen, vorzugsweise Branntkalk und/oder Kalksteinmehl, vermischt in einer der Aufbereitungsanlage nachgeschalteten Verbrennungsanlage für fossile Brennstoffe energetisch verwertet werden, oder
   b) bei hohem Gehalt eines oder mehrerer bestimmter Schwermetalle zwecks Rückgewinnung der Schwermetalle der Verhüttung zugeführt werden, oder
   c) bei hohem Gehalt an halogenierten Verbindungen einer Sonderabfallbehandlung oder Deponierung zugeführt, oder
   d) bei hohem Gehalt an schwerbrennbaren oder unbrennbaren aber sinterfähigen Komponenten zu gesinterten Granulaten verarbeitet werden, oder einer sonstigen stofflichen Verwertung zugeführt werden, wobei gegebenenfalls auch Gemische verschiedener Reststoffe der Stufe 2 oder 3 zugeführt werden können,
4. die in der Stufe 2 abgetrennten flüchtigen organischen Verbindungen und/oder Wasser kondensiert und je nach Zusammensetzung entweder
   a) in einer nachgeschalteten Verbrennungsanlage für fossile Brennstoffe energetisch verwertet werden, oder
   b) einer Trennung, Reinigung und stofflichen Verwertung zugeführt werden, oder
   c) für den Aufschluß anderer Reststoffe verwendet werden,
5. die mit Dämpfen der flüchtigen organischen Verbindungen verunreinigte abgesaugte Luft aus dem Reststoffaufgabebereich der Stufe 2 und aus der Stufe 4 gesammelt und je nach Zusammensetzung entweder
   a) separat oder zusammen mit der Abluft der Lackierereien und lackverarbeitenden Betriebe gereinigt, oder
   b) in eine Verbrennungsanlage für fossile Brennstoffe eingeblasen wird.

Vorzugsweise werden somit in der zentralen Aufbereitungsund Verwertungsanlage die anfallenden Reststoffe der Stufen 1 bis 4 zwar getrennt gesammelt und getrennt zwischengelagert, jedoch die Vorrichtungen zur Durchführung der Stufen nacheinander für alle Reststoffarten eingesetzt.

Wesentlicher Bestandteil des erfindungsgemäßen Verfahrens ist somit das Verfahren gemäß der älteren deutschen Patentanmeldung P 39 00 482.1 zur Entsorgung von Lack- und Farbschlämmen sowie Farbmittelabfällen, welches in den Stufen 2 und 3a durchgeführt wird.

Abweichend von dem älteren Verfahren wird erfindungsgemäß dafür gesorgt, Reststoffe mit hohem Gehalt an einem oder mehreren Schwermetallen getrennt zu sammeln und nach Möglichkeit zwecks Rückgewinnung der Schwermetalle der Verhüttung zuzuführen. Weiterhin werden Reststoffe mit hohem Gehalt an halogenierten Kohlenwasserstoffen getrennt gesammelt und einer Sonderabfallbehandlung oder Deponierung zuführt. Schließlich werden Reststoffe mit hohem Gehalt an schwer brennbaren oder unbrennbaren aber sinterfähigen Komponenten zu gesinterten Granulaten verarbeitet oder einer sonstigen stofflichen Verwertung zugeführt. Insbesondere wenn diese Granulate schwermetallarm sind, können sie relativ leicht und unproblematisch zu den verschiedensten Zwecken verwendet werden. Sie führen auf diese Art und Weise auch zu einer geringeren Belastung des Kohlekraftwerkes. Größere Mengen derartiger Reststoffe können nämlich zu unerwünschten Schwankungen der Zusammensetzung der Asche und der Abgase des Kohlekraftwerks führen.

Dadurch, daß beim erfindungsgemäßen Verfahren die verschiedensten Reststoffe getrennt gesammelt und zwischengelagert werden, ist es durchaus möglich, auch mengenmäßige und zeitlich stark schwankend anfallende Reststoffe optimal zu verwerten und zu entsorgen, ohne die Wirtschaftlichkeit des Verfahrens und der Anlage zu gefährden.

Das Kernstück der Vorrichtung zur Durchführung des erfindungsgemäßen Verfahrens besteht aus einem heizbaren Vorlagebehälter B1, einer Dosierschnecke X1 mit vorgeschaltetem Stopfteil, einem kontinuierlich arbeitenden Kontakttrockner T1 mit einer Misch- und Knetvorrichtung, gegebenenfalls einer Austragschnecke für Feststoffe H1, einer Kühlschnecke W2, gegebenenfalls einem Brecher Z1, einer Fördereinrichtung H2, einer Serie von Feststoff-Zwischenlagerbehältern B3 bis B8, Austrags- und Dosiereinrichtungen X2 bis X7, einer Fördereinrichtung H3, gegebenenfalls einem Mischbehälter B9, einem Zwischenlagerbehälter B10, einem mit dem Kontakttrockner verbundenen Kondensator für Brüden W1, einer Pumpe P1 für Kondensat, einem Kondensatbehälter B2, wobei mindestens die Feststoff-Zwischenbehälter B3 bis B10 durch Entlüftungsleitungen und gegebenenfalls ein Abluftfilter verbunden sind sowie der Kondensator für Brüden W1 und der Reststoffaufgabebereich für den Vorlagebehälter B1 mit einer integrierten Abluftreinigung der Abluftverbrennung verbunden sind und der Kondensator W1 gegebenenfalls mit einem Wärmekreislauf zur Vorwärmung der Reststoffe im Vorlagebehälter B1 verbunden ist.

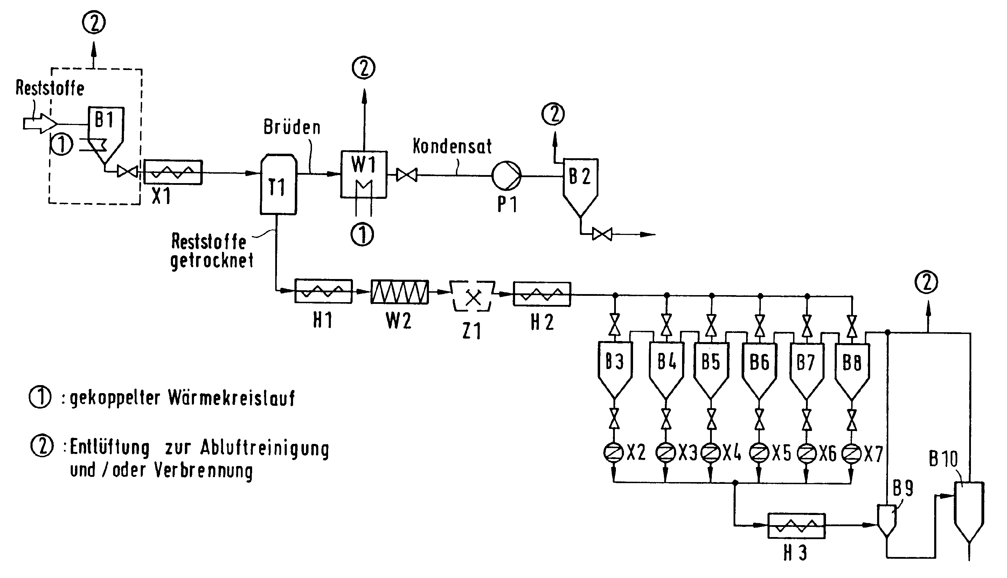

In dem anliegenden Verfahrensfließbild, Fig. 1, ist dieses Kernstück der Vorrichtung näher erläutert.

Nicht mehr dargestellt in dem Verfahrensfließbild sind die in üblicher Weise hiermit verbundenen oder zusammenwirkenden Vorrichtungen, wie die verschließbaren Transportbehälter, die beispielsweise ein Volumen von ca. 1 m³ aufweisen können und aus praktischen Gründen deutlich unterschiedlich gekennzeichnet sein sollten.

Nicht dargestellt sind weiterhin die Vorrichtungen, wie übliche Kohlemahlanlagen für kohlebefeuerte Kraftwerke, insbesondere Schmelzkammerkessel, Brennstofflanzen zum Einspritzen von zu verbrennenden Lösungsmitteln sowie Absaugvorrichtungen und Reinigungsanlagen für Abluftströme inklusive üblichen Aktivkohlefiltern. Die mit Lösungsmitteldämpfen beladenen Kohlefilter können ihrerseits entweder regeneriert oder in einer nachgeschalteten Schmelzkammerfeuerung verbrannt werden. Auf alle Fälle gestattet die integrierte Absaugung von gegebenenfalls aus der Anlage austretenden Lösungsmitteldämpfen in praktisch allen in Frage kommenden Verfahrensstufen eine optimale Reinhaltung der Luft. Außer Kohlekraftwerken können dazu auch Verbrennungsanlagen für Leichtöl oder Schweröl herangezogen werden.

Ein weiterer Vorteil des erfindungsgemäßen Verfahrens und der dafür geeigneten Vorrichtung ist, daß sie in einfacher Weise zentral gesteuert und geregelt werden kann. Insbesondere die Dosier- und Austragsvorrichtungen können beispielsweise drehzahlgeregelt ausgeführt werden, um die Anlage so flexibel wie möglich zu gestalten. Dadurch ist es dann auch möglich, mit nur geringem Personalaufwand die verschiedenen Varianten des Verfahrens durchzuführen, je nach Art des gerade zu verarbeitenden Reststoffes.

Weiterhin ist es möglich, die Anlage auch an neu auftretende Reststoffe oder neu auftretende Entsorgungsprobleme anzupassen. Insbesondere, wenn der Bedarf und die Nachfrage nach stofflich verwertbaren Komponenten nicht oder noch nicht oder nicht mehr besteht, kann erfindungsgemäß zumindest im Verbund mit einer Verbrennungsanlage für fossile Brennstoffe eine energetische Verwertung der aus der vorgeschalteten Aufbereitungsanlage austretenden Teilproduktströme stattfinden. Zu derartigen variablen Lösungen zählen auch das Beimischen, Mitverwerten und Mitentsorgen von Reststoffen aus anderen Anlagen, wie Aschen mit erhöhtem Gehalt an unverbrauchtem Kohlenstaub, problematische Reststoffe aus anderen Verbrennungsanlagen, problematische Wirbelschichtaschen mit hohem Gehalt an Tonmineralien, aus denen vielfach aber gesinterte Granulate gewonnen werden können. Bei der Durchführung des erfindungsgemäßen Verfahrens hat sich als kontinuierlich arbeitender Kontakttrockner mit einer Misch- und Knetvorrichtung ein Gerät der Firma List AG, Pratteln (Schweiz) bewährt, welches unter der Bezeichnung "Discotherm B" angeboten und vertrieben wird. Es besteht aus einer rotierenden Rührwelle, auf der scheibenförmige, heizbare Segmente mit Mischbarren am äußeren Durchmesser aufgesetzt sind. Der axiale Produkt-Transport wird durch die Neigung der Mischbarren erzeugt. Diese Mischbarren sind zwischen den Scheibenpaaren unterbrochen. In dem dadurch entstehenden, von den Mischbarren nicht bestrichenen Gehäuseteil sind feststehende Gegenschaufeln eingesetzt, die die Scheiben und die Welle reinigen. Die Wechselwirkung zwischen den umlaufenden Scheibenelementen und den feststehenden Gegenschaufeln ergibt eine intensive Misch- und Knetwirkung sowie eine ca. 90-%ige Selbstreinigung, so daß es nicht zu Verbackungen und Verstopfungen durch die Reststoffe aus Lackierereien und lackverarbeitenden Betrieben kommt. Obwohl auch mit diesem Gerät Betriebstemperaturen bis 350°C erzielt werden können, wird erfindungsgemäß nur mit Temperaturen zwischen 120 und 250°C gearbeitet. Unter diesen Betriebsbedingungen bleiben die polymeren Bestandteile und Bindemittel der Lacke und Farben weitgehend unzersetzt, so daß sie anschließend energetisch verwertet werden können.

### Beispiel

Ein Lackkoagulatgemisch aus 1 Teil Decklack "uni" und 1 Teil Decklack "metallic", wie es typischerweise in den Lackierereien der Automobilindustrie anfällt, wurde in einem Batch-Trockner vom Typ "Discotherm B 3 Batch" bei einer Temperatur von ca.230°C und innerhalb von 50 Minuten getrocknet. Dabei wurden 60 % eines gekörnten, riesel- und mahlfähigen Feststoffes und 40 % eines Brüdenkondensates erhalten, welches sich wiederum aus 75 Teilen einer wäßrig-alkoholischen Phase und 25 Teilen einer aus organischen Lösemitteln bestehenden Phase zusammensetzt.

Diese thermische Aufbereitung führte zu einer Erhöhung des ursprünglichen Heizwerts des Gemisches von ca. 20 MJ/kg auf 26 MJ/kg des Feststoffs und ermöglicht somit eine bessere thermische Nutzung des getrockneten Feststoffes für eine nachgeschaltete energetische Verwertung.

Die anfallenden kondensierten Brüden ließen sich problemlos in eine organische und eine wäßrige Phase trennen und ermöglichten neben einer energetischen auch eine stoffliche Verwertung.

## Patentansprüche

1. Verfahren zur Verwertung von Reststoffen und Abwässern aus Lackierereien und lackverarbeitenden Betrieben, insbesondere von Lack- und Farbschlämmen sowie Farbmittelabfällen aus der Automobilindustrie, mit folgenden Verfahrensschritten:
1. die unterschiedlichen, gegebenenfalls mechanisch vorentwässerten Reststoffe werden in verschließbaren Transportbehältern an den verschiedenen Anfallorten des Betriebes getrennt gesammelt und zu einer zentralen Aufbereitungs- und Verwertungsanlage transportiert,
2. die unter den gewählten Prozessbedingungen flüchtige organische Verbindungen und/oder Wasser enthaltenden Reststoffe werden in einem weitgehend selbstreinigenden, indirekt beheizten kontinuierlich betriebenen Kontakttrockner bei 120 bis 250°C und leichtem Unterdruck unter Kneten und Mischen getrocknet und vorzerkleinert,
3. die so erhaltenen getrockneten Reststoffe werden je nach Zusammensetzung entweder
a) gegebenenfalls unter Kühlung vermahlen und mit fossilen Brennstoffen, vorzugsweise Kohlenstaub, sowie gegebenenfalls mit alkalischen Zuschlagstoffen, vorzugsweise Branntkalk und/ oder Kalksteinmehl, vermischt in einer der Aufbereitungsanlage nachgeschalteten Verbrennungsanlage für fossile Brennstoffe energetisch verwertet, oder
b) bei hohem Gehalt eines oder mehrerer bestimmter Schwermetalle zwecks Rückgewinnung der Schwermetalle der Verhüttung zugeführt, oder
c) bei hohem Gehalt an halogenierten Verbindungen einer Sonderabfallbehandlung oder Deponierung zugeführt, oder
d) bei hohem Gehalt an schwerbrennbaren oder unbrennbaren aber sinterfähigen Komponenten zu gesinterten Granulaten verarbeitet, oder einer sonstigen stofflichen Verwertung zugeführt, wobei gegebenenfalls auch Gemische verschiedener Reststoffe der Stufe 2 oder 3 zugeführt werden können,
4. die in der Stufe 2 abgetrennten flüchtigen organischen Verbindungen und/oder Wasser werden kondensiert und je nach Zusammensetzung entweder
a) in einer nachgeschalteten Verbrennungsanlage für fossile Brennstoffe energetisch verwertet, oder
b) einer Trennung, Reinigung und stofflichen Verwertung zugeführt, oder
c) für den Aufschluß anderer Reststoffe verwendet,
5. die mit Dämpfen der flüchtigen organischen Verbindungen verunreinigte abgesaugte Luft aus dem Reststoffaufgabebereich der Stufe 2 und aus der Stufe 4 wird gesammelt und je nach Zusammensetzung entweder
a) separat oder zusammen mit der Abluft der Lackierereien und lackverarbeitenden Betriebe gereinigt, oder
b) in eine Verbrennungsanlage für fossile Brennstoffe eingeblasen.

2. Verfahren gemäß Anspruch 1, dadurch gekennzeichnet, daß in der zentralen Aufbereitungs- und Verwertungsanlage die anfallenden Reststoffe der Stufen 1 bis 4 zwar getrennt gesammelt und getrennt zwischengelagert werden, jedoch die Vorrichtungen zur Durchführung der Stufen 2 bis 5 nacheinander für alle Reststoffarten eingesetzt werden.

3. Verfahren gemäß Ansprüchen 1 oder 2, dadurch gekennzeichnet, daß folgende Reststoffe getrennt gesammelt und aufgearbeitet werden:
a) Lack- und Farbschlämme aus den Lackierereien gleicher oder ähnlicher Zusammensetzung, aber schwermetallarm,
b) Lack- und Farbschlämme schwermetallhaltig, gegebenenfalls nach Farben und Schwermetallart getrennt,
c) Klärschlämme aus Abwasseranlagen, die Lackierereien und sonstigen lackverarbeitenden Betrieben nachgeschaltet sind,
d) mit Lack oder Farbe beschichtete oder getränkte Abfälle aus Papier, Stoff oder Kunststoff, gegebenenfalls wiederum voneinander getrennt,
e) mit Lack oder Farbe verunreinigte Wachse, Fette, Öle oder Lösungsmittel, gegebenenfalls wiederum voneinander getrennt,
f) Klärschlämme oder sonstige organische Schlämme aus anderen Bereichen.

4. Vorrichtung zur Durchführung des Verfahrens gemäß einem der Ansprüche 1 bis 3, bestehend aus einem heizbaren Vorlagebehälter (B1), einer Dosierschnecke (X1) mit vorgeschaltetem Stopfteil, einem kontinuierlich arbeitenden Kontakttrockner (T1) mit einer Misch- und Knetvorrichtung, gegebenenfalls einer Austragschnecke für Feststoffe (H1), einer Kühlschnecke (W2), gegebenenfalls einem Brecher (Z1), einer Fördereinrichtung (H2), einer Serie von Feststoff-Zwischenlagerbehältern (B3 bis B8), Austrags- und Dosiereinrichtungen (X2 bis X7), einer Fördereinrichtung (H3), gegebenenfalls einem Mischbehälter (B9) und einem Zwischenlagerbehälter (B10), die alle zum Feststofftransport in dieser Reihenfolge miteinander verbunden sind, weiterhin bestehend aus einem mit dem Kontakttrockner verbundenen Kondensator für Brüden (W1), der über eine Pumpe (P1) für Kondensat, mit einem Kondensatbehälter (B2) verbunden ist, wobei mindestens die Feststoff-Zwischenbehälter (B3 bis B10) durch Entlüftungsleitungen und gegebenenfalls ein Abluftfilter miteinander Verbunden sind sowie der Kondensator für Brüden (W1) und der Reststoffaufgabebereich für den Vorlagebehälter (B1) mit einer integrierten Abluftreinigung der Abluftverbrennung verbunden sind und der Kondensator (W1) gegebenenfalls mit einem Wärmekreislauf zur Vorwärmung der Reststoffe im Vorlagebehälter (B1) verbunden ist.

## Claims

1. A process for utilizing residues and waste waters from paint shops and lacquer-processing plants, particularly lacquer and paint sludges as well as colourant wastes from the automobile industry, comprising the following processing steps:
i) the various, optionally mechanically pre-dehydrated residues are collected separately in sealable transport containers at the different locations in the plant where they are obtained, and are shipped to a central treatment and utilization plant;
ii) the organic compounds being volatile under the process conditions selected and/or residues containing water are dried and pre-comminuted in a largely self-cleaning, indirectly heated, continuously operated contact drier at from 120 to 250°C and under slight vacuum with kneading and mixing;
iii) the residues thus obtained and dried are - depending on composition - either
a) ground, optionally with cooling, and are utilized energetically as a mixture with fossil fuel, preferably coal dust, and optionally with alkaline loading materials, preferably quicklime and/or limestone powder in a combustion plant for fossil fuel connected subsequent to the treatment plant; or
b) with high content of one or several certain heavy metals, are subjected to smelting in order to recover the heavy metals; or
c) with high content of halogenated compounds are subjected to special waste treatment or disposal; or
d) with high content of less combustible or incombustible but sinterable components are processed to give sintered granulates, or are subjected to other material utilization where optionally mixtures of different residues may be fed to stages ii) or iii);
iv) the volatile organic compounds removed in stage ii) and/or water are condensed and, depending on composition, either are
a) energetically utilized in a downstream-connected combustion plant for fossil fuel; or
b) subjected to separation, purification and material utilization; or
c) used for digestion of other residues;
v) the exhausted air from the residue charging zone of stage ii) and from stage iv), impured by volatile organic compounds, is collected and, depending on composition, either is
a) purified separately or together with outlet air of paint shops or lacquer-processing plants; or
b) blown into a combustion plant for fossil fuel.

2. The process according to claim 1, characterized in that while the residues obtained in stages i) to iv) are collected separately and put to interim storage separately in the central treatment and utilization plant, the devices for carrying out the stages ii) to v) are employed successively for all types of residues.

3. The process according to claims 1 or 2, characterized in that the following residues are collected and processed separately:
a) lacquer and colour sludges from paint shops having equal or similar compositions but being low in heavy metals;
b) lacquer and colour sludges containing heavy metals, optionally separated with respect to colour and kind of heavy metal;
c) sewage sludges from waste-water plants connected subsequent to paint shops or other lacquer-processing plants;
d) paper, textile or plastic wastes coated or soaked with lacquer or colour, again, optionally separated from each other;
e) waxes, grease, oils, or solvents impured with lacquer or colour, again, optionally separated from each other;
f) sewage sludges or other organic sludges from other sectors.

4. A device for conducting the process according to one of claims 1 to 3, consisting of a heatable receiver (B1), a dosage screw (X1) having a pre-connected stuffing element, a continuously operating contact drier (T1) having a mixing and kneading device, optionally a discharging screw for solids (H1), a cooling screw (W2), optionally a crusher (Z1), a transport unit (H2), a series of containers for interim storage of solids (B3 to B8), discharging and dosage units (X2 to X7), a transport unit (H3), optionally a mixing container (B9), and a container for interim storage (B10), in this order altogether connected to each other for solids transport, and further consisting of a vapour condenser (W1) connected to the contact drier, and through a pump (P1) for condensate, to a condensate container (B2), at least the containers for interim storage of solids (B3 to B10) being connected to each other by vent lines and optionally an air outlet filter, and the vapour condenser (W1) and the residue charging zone for the receiver (B1) being connected to an integrated exhaust air purification of the (or) exhaust combustion, and the condenser (W1) optionally being connected to a heat circulation for preheating residues in the receiver (B1).

## Revendications

1. Procédé de récupération des résidus et des eaux de rejet provenant d'ateliers de laquage et d'entreprises travaillant des vernis, en particulier récupération de boues de vernis et de matières colorantes ainsi que de résidus de matières colorantes provenant de l'industrie automobile, ce procédé comportant les étapes suivantes:
1) les différents résidus, le cas échéant préalablement séchés mécaniquement, sont collectés séparément, aux différents lieux de production, dans des récipients de transport munis de fermetures, et transportés à une installation de traitement et de récupération.
2) dans un sécheur à contact, largement auto-nettoyant, à entraînement continu et à chauffage indirect, les résidus contenant de l'eau et/ou de composés organiques, volatifs dans les conditions choisies pour le procédé, sont séchés avec malaxage et mélange, sous une température de 120°C à 250°C et sous une légère dépression, et pré-concassés,
3) les résidus séchés ainsi obtenus sont, suivant composition,
a) soit moulus, le cas échéant avec refroidissement, puis, en mélange avec des combustibles fossiles, de préférence du poussier de charbon, ainsi que, le cas échéant, avec des produits d'addition basiques, de préférence de la chaux vive et/ou de la farine de calcaire, sont réutilisés comme source d'énergie dans une installation de combustion pour combustibles fossiles, placée après l'installation de traitement,
b) soit, dans le cas d'une teneur élevée en un ou plusieurs métaux lourds, ils sont envoyés au traitement métallurgique, en vue de la récupération de ces métaux lourds,
c) soit, dans le cas d'une teneur élevée en composés halogénés, ils sont envoyés à un traitement spécialisé pour ces déchets ou à une décharge spécialisée,
d) soit, dans le cas d'une teneur élevée en composés incombustibles ou difficilement combustibles, mais se prêtant au frittage, ils sont transformés en granulés frittés, ou envoyés à une quelconque installation de récupération de matériaux, des mélanges de différents résidus des étapes 2 et 3 pouvant, le cas échéant, y être également envoyés.
4) les composés organiques volatils, séparés à l'étape 2, et/ou l'eau sont condensés et, d'après composition, sont
a) soit réutilisés comme source d'énergie dans une installation de combustion pour combustibles fossiles,
b) soit envoyés à une installation de séparation, de purification et de récupération des matières,
c) soit utilisés pour le traitement d'autres résidus.
5) l'air non purifié, aspiré avec les vapeurs des composés organiques volatils, et provenant de la zone d'arrivée des résidus de l'étape 2 et de l'étape 4, est collecté et, suivant composition,
a) soit purifié séparément ou en même temps que l'air évacué des ateliers de laquage et ateliers travaillant des vernis,
b) soit injecté dans une installation de combustion pour combustibles fossiles.

2. Procédé suivant la revendication 1, caractérisé en ce que, dans l'installation centrale de préparation et de récupération, les arrivées de résidus des étapes 1 à 4 sont bien collectés séparément, puis préstockés séparément, mais les dispositifs pour la mise en oeuvre des étapes 2 à 5 sont installés, pour tous les types de résidus, à la suite les uns des autres.

3. Procédé suivant la revendication 1 ou la revendication 2, caractérisé en ce que les résidus suivants sont collectés et traités séparément:
a) boues de vernis et de matières colorantes provenant des ateliers de laquage, de composition identique ou analogue, mais pauvres en métaux lourds,
b) boues de vernis et de colorants contenant des métaux lourds, le cas échéant séparées d'après la couleur et le type de métaux lourds,
c) boues de décantation provenant d'installations d'eaux usées situées en aval d'ateliers de vernissage et de divers ateliers travaillant avec des vernis,
d) déchets de papier, de textile ou de matière plastique recouverts ou imprégnés de vernis et de colorants, de nouveau, le cas échéant, séparés les uns des autres,
e) cires, graisses, huiles ou solvants pollués par des vernis ou des colorants, de nouveau, le cas échéant, séparés les uns des autres,
f) boues de décantation ou autres boues organiques diverses provenant d'autres secteurs.

4. Dispositif pour la mise en oeuvre du procédé suivant l'une quelconque des revendications 1 à 3, constitué par un récipient de préstockage (B1) chauffable, une vis de dosage (X1) comportant une pièce d'obturation placée en amont, un sécheur à contact (T1) travaillant en continu et comportant un dispositif de mélange et de malaxage, le cas échéant un extracteur à vis pour les produits solides (H1), une vis de refroidissement (W2), le cas échéant un broyeur (Z1), un dispositif de transport (H2), une série de récipients de stockage intermédiaires (B3 à B8) pour les produits solides, des dispositifs d'extraction et de dosage (X2 à X7), un dispositif de transport (H3), le cas échéant un récipient de mélange (B9) et un récipient de stockage intermédiaires (B10), qui sont tous reliés entre eux, dans cet ordre, pour transporter des produits solides, le dispositif comprenant, de plus, un condenseur pour vapeurs (W1), raccordé au sécheur à contact et relié, par une pompe pour condensats (P1), à un récipient pour condensats (B2), étant entendu qu'au moins les récipients de stockage intermédiaires (B3 à B10) sont raccordés entre eux par des conduites de ventilation et le cas échéant par un filtre d'évacuation d'air pollué, que le condenseur pour vapeurs (W1) et la zone d'arrivée des résidus pour le récipient de préstockage (B1) sont reliés à une installation intégrée d'épuration ou de combustion de l'air pollué, et que le condenseur (W1) est, le cas échéant, relié à un circuit de chaleur pour préchauffer les résidus dans le récipient de préstockage (B1).
